# EUROPÄISCHE PATENTSCHRIFT

(11) **EP 2 185 306 B1**
(45) Veröffentlichungstag und Bekanntmachung des Hinweises auf die Patenterteilung: **25.02.2015**
(21) Anmeldenummer: 08786559.8
(22) Anmeldetag: 29.07.2008
(51) Int. Cl.: B23B 51/02

(54) **BOHRWERKZEUG FÜR WERKZEUGMASCHINEN SOWIE VERFAHREN ZU DESSEN HERSTELLUNG**
DRILLING TOOL FOR MACHINE TOOLS AND METHOD FOR THE PRODUCTION THEREOF
OUTIL DE PERÇAGE POUR MACHINES-OUTILS AINSI QUE PROCÉDÉ POUR SA FABRICATION

(30) Priorität: 06.09.2007 DE 102007042280
(43) Veröffentlichungstag der Anmeldung: 19.05.2010
(73) Patentinhaber: Komet Group GmbH, 74354 Besigheim (DE)
(72) Erfinder: NITZSCHE, Hendrik, 71711 Murr (DE); STOLZ, Gerhard, 74379 Ingersheim (DE); HAIDINGER, Hans, 74385 Pleidelsheim (DE); SPORS, Benno, 71672 Marbach (DE)
(74) Vertreter: Wolf, Pfiz & Gauss
(86) Internationale Anmeldenummer: PCT/EP2008/059921
(87) Internationale Veröffentlichungsnummer: WO 2009/033879

(56) Entgegenhaltungen:
- CH-A5- 665 979
- DE-A1- 3 545 586
- JP-A- 57 107 718
- JP-A- 2001 121 332
- US-A- 4 188 813
- US-A- 5 676 499
- US-A- 5 782 587
- US-A1- 2005 135 887

## Beschreibung

Die Erfindung betrifft ein Bohrwerkzeug für Werkzeugmaschinen der im Oberbegriff des Anspruchs 9 angegebenen Gattung sowie Verfahren zur Herstellung eines derartigen Bohrwerkzeugs. Solche Verfahren sind aus US-A-4 188 813 und US-A-5676499 bekannt. Ein solcher Bohrwerkzeug ist aus der US-A-5782 587 bekannt.

Es ist ein Bohrwerkzeug dieser Art bekannt (EP-B-0883455), das einen Bohrerkörper, einen stirnseitig an diesem angeordneten Schneidkopf und einen endseitig an diesem angeordneten Schaft aufweist. Der Bohrerkörper weist zwei an ihren Flanken durch wendelförmig gekrümmte Rippen begrenzte Spanfördernuten auf. Weiter weist der Schneidkopf zwei Schneidplatten auf, die in unterschiedlichen radialen Abständen von der Bohrerachse mit einander teilweise überlappenden Arbeitsbereichen in je einem vertieften Plattensitz angeordnet sind. Hinzu kommt, dass der Bohrerkörper an seinem dem Schneidkopf abgewandten Ende einen rippenfreien, einen zentralen Kühlmittelversorgungskanal enthaltenden Bohrerschaft aufweist, und dass in den Rippen des Bohrerkörpers Kühlmittelkanäle angeordnet sind. Die Kühlmittelkanäle greifen dort wendelförmig durch den Bohrerkörper hindurch und münden in den zentralen Versorgungskanal. Die zwischen den Spanförderhuten befindlichen Rippen sind bei den bekannten Bohrern mit gleicher Steigung gewendelt. Ihre Breite ist über die Bohrerlänge hinweg gleich. Es wurde zwar schon vorgeschlagen, dass die Spanfördernuten entlang dem Bohrerkörper variable Steigungen aufweisen. Der gegenseitige Abstand der Spanfördernuten und die Breite der dazwischen liegenden Rippen blieb jedoch im Wesentlichen gleich.

Es hat sich gezeigt, dass die Qualität eines Bohrwerkzeugs wesentlich von baulichen Merkmalen abhängig ist. Grundsätzlich ist es möglich, das Abdrängverhälten, das Schwingungsverhalten, das Biegeverhalten, die Spanbildung und das Entspanungsverhalten eines Bohrers durch geeignete konstruktive Maßnahmen in positiver Hinsicht zu beeinflussen.

Ausgehend hiervon liegt der Erfindung die Aufgabe zugrunde, das Verhalten des Bohrwerkzeugs beim Bohrvorgang hinsichtlich Schwingen, Biegen und Tordieren im Bereich des Bohrerkörpers zu verbessern. Eine weitere Aufgabe wird in einem Verfahren gesehen, das zur Herstellung der erfindungsgemäßen Werkzeuge besonders gut geeignet ist.

Zur Lösung dieser Aufgabe werden die im Patentanspruch 9 sowie in den unabhängigen Verfahrensansprüchen angegebenen Merkmalskombinationen vorgeschlagen. Vorteilhafte Ausgestaltungen und Weiterbildungen der Erfindung ergeben sich aus den abhängigen Ansprüchen.

Die Erfindung besteht im Wesentlichen darin, dass die zu verschiedenen Schneiden gehörenden Spanfördernuten in ihrem Verlauf über den Bohrerkörper unterschiedliche Steigungen aufweisen. Dadurch ergeben sich unterschiedliche und zugleich über die Länge variable Querschnitte oder Breiten der zwischen den Spanfördernuten befindlichen Rippen, die einen wesentlichen Einfluss auf das Biege- und Torsionsverhalten des Bohrerkörpers aufweisen. Im Idealfall wird dabei angestrebt, dass die Neutrallinie der Bohrerbiegung mit der Zentralachse zusammenfällt. In diesem Fall heben sich die Biegekräfte auf, so dass am Bohrerkörper nur noch Torsionskräfte angreifen. Andererseits kann die Torsion nur durch eine entsprechende Aussteifung in Torsionsrichtung, also in Umfangsrichtung kompensiert oder eliminiert werden. Hierzu ist es von Vorteil, wenn sich der Querschnitt der Rippen über die Länge des Bohrerschafts permanent verändert. Ziel dieser Veränderung ist eine Dämpfung der Torsionsschwingungen.

Um dies zu erreichen, wird an einem Bohrerkörper mit zwei an ihren Flanken durch Rippen begrenzte Spanfördernuten vorgeschlagen, dass die erste Spanfördernut wendelförmig gekrümmt ist, während eine zweite Spanfördernut ungewendelt ist oder mit einer gegenüber der ersten Spanfördernut abweichenden, in gleicher Drehrichtung verlaufenden Steigung wendelförmig gekrümmt ist.

Vorteilhafterweise ist am schneidkopfseitigen Ende einer jeden Spanfördernut jeweils mindestens eine Schneide angeordnet, die beispielsweise jeweils durch eine Schneidplatte oder durch eine lösbar am Bohrerkörper angeordnete Bohrkrone gebildet sein kann.

Im Falle von Schneidplatten ist es von Vorteil, wenn diese in den einzelnen Spanfördernuten in unterschiedlichen radialen Abständen von einer Zentralachse des Bohrerkörpers angeordnet sind, wobei eine äußere Schneidplatte mit ihrer äußeren Schneidenecke über den Umfang des Bohrerkörpers und eine innere Schneidplatte mit ihrer inneren Schneidenecke über die Zentralachse radial überstehen, und wobei die der inneren Schneidplatte zugeordnete Spanfördernut stärker gewendelt ist als die der äußeren Schneidplatte zugeordnete Spanfördernut. Bei diesen Überlegungen ist zu berücksichtigen, dass die äußere Schneidplatte und die zugehörige Außennut einen größeren Einfluss auf das Schwingungsverhalten hat, da dort die auftretenden Schnittkräfte und die ausgetragene Materialmenge um ein Mehrfaches höher als an der inneren Schneidplatte und im Bereich der inneren Spanfördernut sind. Ein wichtiges Ziel der Erfindung ist es daher, die Rippen im Bereich der Außennut auszusteifen. Dies kann dadurch bewerkstelligt werden, dass die Außennut weniger stark gewendelt wird als die Innennut. Dementsprechend wird gemäß einer bevorzugten Ausgestaltung der Erfindung die die äußere Schneidplatte tragende Rippe in ihrem Verlauf vom Schneidkopf zum Bohrerschaft breiter und die die innere Schneidplatte tragende Rippe schmaler. Verallgemeinert bedeutet dies, dass eine erste der zwischen den Spanfördernuten angeordneten Rippen in ihrem Verlauf vom Schneidkopf zum Schneidschaft hin breiter wird und dass eine zweite der zwischen den Spanfördernuten angeordneten Rippen in ihrem Verlauf vom Schneidkopf zum Schaft hin schmaler wird.

Eine weitere bevorzugte Ausgestaltung der Erfindung sieht vor, dass in den Rippen des Bohrerkörpers Kühlmittelkanäle angeordnet sind, die sich vom schaftseitigen zum schneidkopfseitigen Ende des Bohrerkörpers hin erstrecken und am schneidkopfseitigen Ende eine Austrittsöffnung aufweisen, wobei die in den verschiedenen Rippen angeordneten Kühlmittelkanäle unterschiedlich gewendelt oder sogar ungewendelt sind. Die Austrittsöffnungen der Kühlmittelkanäle sind dabei innerhalb je einer der Spanfördernuten angeordnet, wobei die Austrittsöffnungen über ein ungewendeltes schneidkopfseitiges Kanalendstück mit einem der in den Rippen angeordneten Kühlmittelkanäle kommunizieren. Die Austrittsöffnungen weisen dabei zweckmäßig einen in Richtung Spanfördernuten langgestreckten ovalen oder eiförmigen Umriss auf. Zur Vermeidung von Verstopfungserscheinungen und zur Verbesserung der Spanabfuhr können die Austrittsöffnungen eine entlang den Spanfördernuten verlaufende Rinne bilden oder in eine solche münden.

Zur Herstellung der erfindungsgemäßen Bohrwerkzeuge werden gemäß der Erfindung verschiedene Verfahrensvarianten vorgeschlagen.

Gemäß einer ersten Verfahrensvariante werden folgende Verfahrensschritte vorgeschlagen:
- Ein Grundmaterialkörper wird unter Bildung eines rotationssymmetrischen ersten Rohlings auf Bohrerkörperkontur spanabhebend gedreht,
- an einen zylindrischen Abschnitt des Rohlings werden mindestens zwei Spanfördernuten eingefräst,
- wobei eine der Spanfördernuten in Form einer geradlinigen oder gewendelten Nut in den Rohling eingefräst wird, während die zweite Spanfördernut mit einer von der Wendelung der ersten Spanfördernut abweichenden Wendelung eingefräst wird,
- der auf diese Weise vorgefertigte Rohling wird an in axialem Abstand voneinander angeordneten Einspannstellen in einer zwischen den Einspannstellen befindlichen Zone auf eine vorgegebene Temperatur erhitzt, und an den Einspannstellen mit einem koaxialen Torsionsmoment beaufschlagt und dabei um einen vorbestimmten Winkel wendelförmig plastisch verdrallt.

Mit diesen Maßnahmen wird erreicht, dass die beiden Spanfördernuten mit unterschiedlicher Steigung und gleicher Drehrichtung gekrümmt sind, so dass eine erste zwischen den Spanfördernuten angeordnete Rippe in ihrem Verlauf vom Schneidkopf zum Schaft hin breiter und die andere schmaler wird. Grundsätzlich ist es möglich, dass der vorgefertigte Rohling an einer zur Wendelung der zweiten Nut gegensinnigen Drehrichtung wendelförmig verdrallt wird. Damit kann erreicht werden, dass im fertiggestellten Bohrerkörper eine der beiden Spannuten geradlinig verläuft oder sogar gegensinnig zur Drehrichtung wendelförmig verläuft.

Gemäß einer zweiten Verfahrensvariante der Erfindung werden folgende Verfahrensschritte vorgeschlagen:
- Ein Grundmaterialkörper wird unter Bildung eines rotationssymmetrischen ersten Rohlings auf Bohrkörperkontur spanabhebend gedreht,
- in einen zylindrischen Abschnitt des Rohlings werden mindestens zwei Spanfördernuten eingefräst,
- wobei der auf diese Weise vorgefertigte Rohling an in axialem Abstand voneinander angeordneten Einspannstellen in einer zwischen den Einspannstellen befindlichen Zone auf eine vorgegebene Temperatur erhitzt und an den Einspannstellen mit einem koaxialen Torsionsmoment beaufschlagt und dabei um einen vorbestimmten Winkel wendelförmig plastisch verdrallt wird,
- mit der Besonderheit, dass der Rohling zunächst mit einer ersten geradlinigen Längsnut versehen, anschließend erwärmt und um einen ersten Drehwinkel verdrallt wird und dass anschließend eine zweite Nut in den vorverdrallten Rohling eingefräst wird und dass der Rohling sodann in erwärmtem Zustand um einen zweiten Drehwinkel verdrallt wird.

Auch auf diese Weise ist es möglich, einen Bohrerkörper mit unterschiedlich gewendelten Spanfördernuten herzustellen.

In allen vorstehenden Fällen wird gemäß einer bevorzugten Ausgestaltung der Erfindung vorgeschlagen, dass in die beim Fräsvorgang zwischen den Nuten stehen bleibenden Rippen vor dem Verdrallen des Rohlings eine Tieflochbohrung eingebracht wird, die beim Verdrallen des Rohlings unter Bildung des Kühlmittelkanals gewendelt wird. Bei der zweiten Verfahrensvariante ist es dabei von Vorteil, wenn die erste Tieflochbohrung nach dem Einbringen der ersten geradlinigen Nut und dass die zweite Tieflochbohrung nach dem Einbringen der zweiten geradlinigen Nut eingebracht wird.

Eine dritte Verfahrensvariante sieht gemäß der Erfindung folgende Verfahrensschritte vor:
- Ein Grundmaterialkörper wird unter Bildung eines rotationssymmetrischen Rohlings auf Bohrkörperkontur spanabhebend gedreht,
- in den auf diese Weise hergestellten ersten Rohling werden zwei im Abstand voneinander angeordnete Tieflochbohrungen eingebracht, die sich von exzentrisch zu einer Zentralachse an der Stirnseite des schneidkopfseitigen Rohlingendes angeordneten Stellen aus in Richtung seines Schafts erstrecken,
- der auf diese Weise vorgefertigte zweite Rohling wird an in axialem Abstand voneinander angeordneten Einspannstellen in einer zwischen diesen befindlichen Zone auf eine vorgegebene Temperatur erhitzt und um einen vorbestimmten Winkel wendelförmig plastisch verdrallt,
- wobei als Besonderheit vorgeschlagen wird, dass eine der Tieflochbohrungen schräg zur anderen Tieflochbohrung und zur Zentralachse des ersten Rohlings eingebracht wird und dass in den verdrallten dritten Rohling zwei Spanfördernuten so geradlinig und/oder wendelförmig eingefräst werden, dass die verdrallten Tieflochbohrungen innerhalb von zwischen benachbarten Flanken der Spanfördernuten stehenbleibenden Rippen verlaufen, und dass die Kühlmittelkanäle (32,34) auf der Schneidkopfseite in einem unverdrallten vorzugsweise geradlinigen Bereich unter Bildung von in die Spanfördernuten (24,26) mündende Austrittsöffnungen mit ovalem oder eiförmigem Umriss angefräst werden.

Mit diesen Maßnahmen wird erreicht, dass die nach dem Verdrallen eingebrachten Spanfördernuten mit unterschiedlicher Steigung gewendelt werden können, wobei sichergestellt ist, dass die Tieflochbohrungen ebenfalls unterschiedlich gewendelt sind und sich in den Rippen zwischen den Spanfördernuten befinden.

Weiter ist es mit diesen Maßnahmen besonders einfach möglich, dass die Tieflochbohrungen auf der Schneidkopfseite in einem unverdrallten, vor- zugsweise geradlinigen Bereich unter Bildung von in die Spanfördernuten mündende Austrittsöffnungen angefräst werden. Außerdem können in das schneidkopfseitige Ende der Rippen in unmittelbarer Nähe der Austrittsöffnungen Sitzvertiefungen zur Aufnahme von Schneidplatten eingebracht werden. Die Tieflochbohrungen werden auf der Schneidkopfseite zweckmäßig in ihrem unverdrallten geradlinigen Bereich unter Bildung von Austrittsöffnungen mit ovalem oder eiförmigem Grundriss eingeformt, wobei die Tieflochbohrungen auf der Schneidkopfseite zu randoffenen Rinnen ausgeformt werden können.

Im Folgenden wird die Erfindung anhand der Zeichnungen näher erläutert. Es zeigen
- Fig. 1a: und b je eine Seitenansicht eines auf Bohrerkörperkontur gedrehten rotationssymmetrischen Rohlings ohne und mit Spannfläche;
- Fig. 2a: und b eine Seitenansicht und eine Draufsicht des mit Tieflochbohrungen versehenen Rohlings nach Fig. 1b;
- Fig. 3a: und b eine Seitenansicht und eine Draufsicht des Rohlings nach Fig. 2a und b in verdralltem Zustand;
- Fig. 4a: und b eine Seitenansicht und eine Draufsicht des Rohlings nach Fig. 3a und b mit zwei eingefrästen Spanfördernuten;
- Fig. 5a: bis d drei Seitenansichten und eine Draufsicht des aus dem Rohling nach Fig. 4a und b hergestellten Bohrwerkzeugs;
- Fig. 6a: bis d eine Seitenansicht und drei schaubildliche Darstellungen des Bohrwerkzeugs nach Fig. 5a bis d;
- Fig. 7a: und b eine schaubildliche Darstellung und eine Draufsicht eines Bohrwerkzeugs mit einer geradlinigen äußeren und einer gewendelten inneren Spanfördernut.

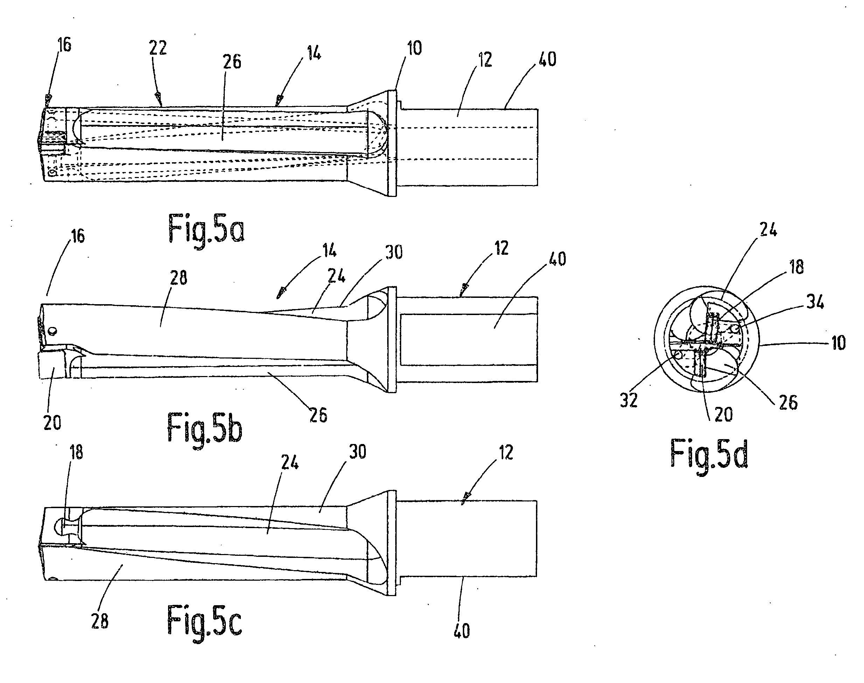

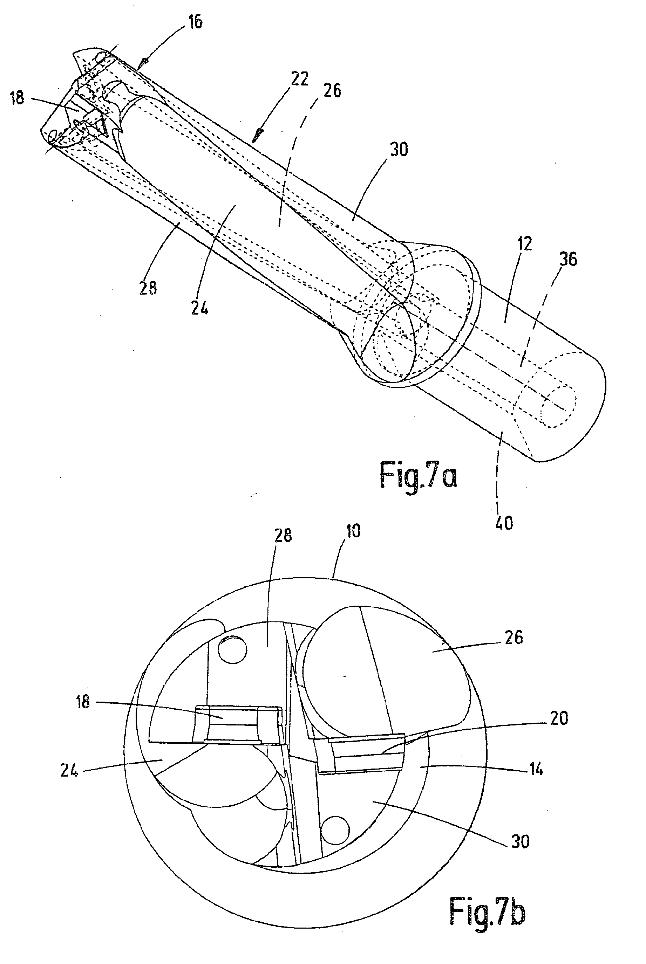

Die in den Fig. 5a bis 7b gezeigten Bohrwerkzeuge sind für den Einsatz in Werkzeugmaschinen bestimmt. Jedes Bohrwerkzeug besteht im Wesentlichen aus einem in einen nicht dargestellten Werkzeughalter einspannbaren, einen als Anschlag für den Werkzeughalter ausgebildeten Bund 10 aufweisenden Bohrerschaft 12, einem Bohrerkörper 14 und einem stirnseitig am Bohrerkörper 14 angeordneten Schneidkopf 16. Der Schneidkopf 16 weist eine radial innere Ausnehmung 18 und eine radial äußere Ausnehmung 20 zur Aufnahme jeweils einer nicht dargestellten Wendeschneidplatte auf. Der Bohrerkörper 14 weist zwischen dem Schneidkopf 16 und dem Bund 10 eine Spanabfuhrpartie 22 auf, die eine der inneren Ausnehmung 18 zugeordnete innere Spanfördernut 24 und eine der äußeren Ausnehmung 20 zugeordnete äußere Spanfördernut 26 aufweist, die an ihren Flanken durch Rippen 28,30 voneinander getrennt sind. Die an ihrem schneidkopfseitigen Ende mit der inneren Ausnehmung 18 versehene Rippe wird im Folgenden als innere Rippe 28 und die mit der äußeren Ausnehmung 20 versehene Rippe als äußere Rippe 30 bezeichnet. Wie insbesondere aus den Fig. 5a und 7a zu ersehen ist, sind im Bohrerkörper 14 zwei Kühlmittelkanäle 32,34 angeordnet, die vom schneidkopfseitigen Ende zum schaftseitigen Ende des Bohrerkörpers 14 innerhalb der Rippen 28,30 verlaufen und am schaftseitigen Ende in einen zentralen Versorgungskanal 36 münden.

Bei dem in den Fig. 5a bis 6d gezeigten Ausführungsbeispiel sind beide Spanfördernuten 24,26 wendelförmig gekrümmt. Entsprechend weisen auch die zugehörigen Rippen 28,30 eine wendelförmige Krümmung auf. Eine Besonderheit dieses Ausführungsbeispiels besteht jedoch darin, dass die zur äußeren Ausnehmung 20 gehörende äußere Spanfördernut 26 eine kleinere Krümmung aufweist und damit steiler ist, als die zur inneren Ausnehmung 18 gehörende Spanfördernut 24. Dementsprechend weisen die zugehörigen Rippen 28,30 von ihrem schneidkopfseitigen Ende zum schaftseitigen Ende hin eine variable Breite auf, die in der genannten Richtung im Falle der inneren Rippe 28 schmaler und im Falle der äußeren Rippe 30 breiter wird. Mit diesen Maßnahmen wird eine höhere Steifigkeit des Bohrers erzielt, so dass das Biege- und Torsionsverhalten des Bohrerkörpers 14 beim Bohrvorgang verbessert und damit die Schwingungsneigung reduziert wird. Dies ist vor allem für Vollbohrer von Bedeutung, mit denen aufgrund der beschriebenen Maßnahmen ein besseres Bohrverhalten sowohl hinsichtlich der erzielbaren Bohrgeschwindigkeit als auch des Bohrergebnisses erzielt werden kann.

Die Kühlmittelkanäle 32,34 müssen vor oder nach dem Einbringen der Spanfördernuten 24,26 so innerhalb des Bohrerkörpers 14 platziert werden, dass sie vollständig in die Rippen 28,30 zwischen den Spanfördernuten 24,26 eingebettet sind.

Für die Herstellung der beschriebenen Bohrwerkzeuge werden verschiedene Verfahrensvarianten vorgeschlagen.

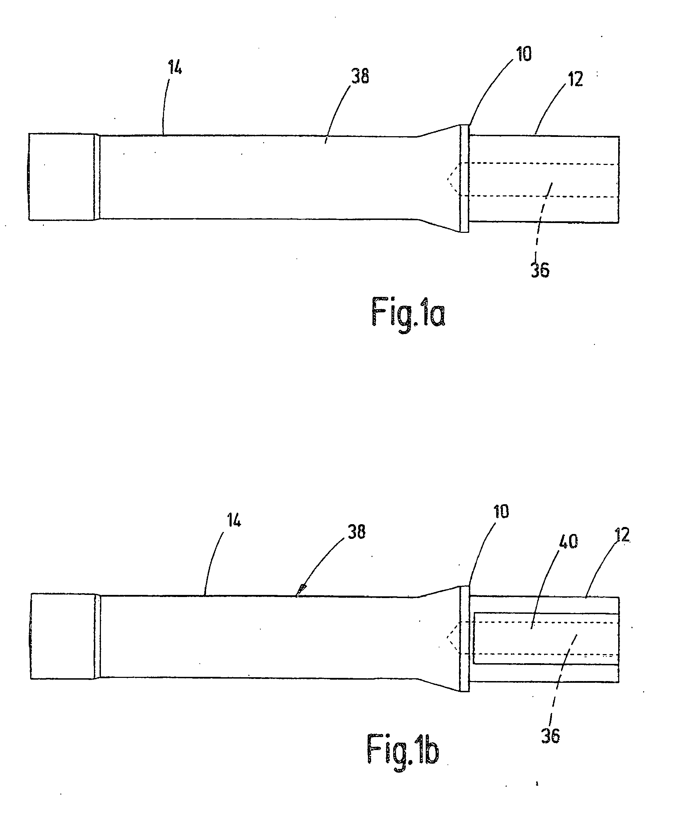

Stets wird in einem ersten Verfahrensschritt ein Grundmaterialkörper unter Bildung eines rotationssymmetrischen ersten Rohlings 38 auf Bohrerkörperkontur spanabhebend gedreht (Fig. 1 a). Außerdem werden in den Schaft 12 der zentrale Versorgungskanal 36 und eine einseitige Spannfläche 40 (Fig. 1 b) eingeformt.

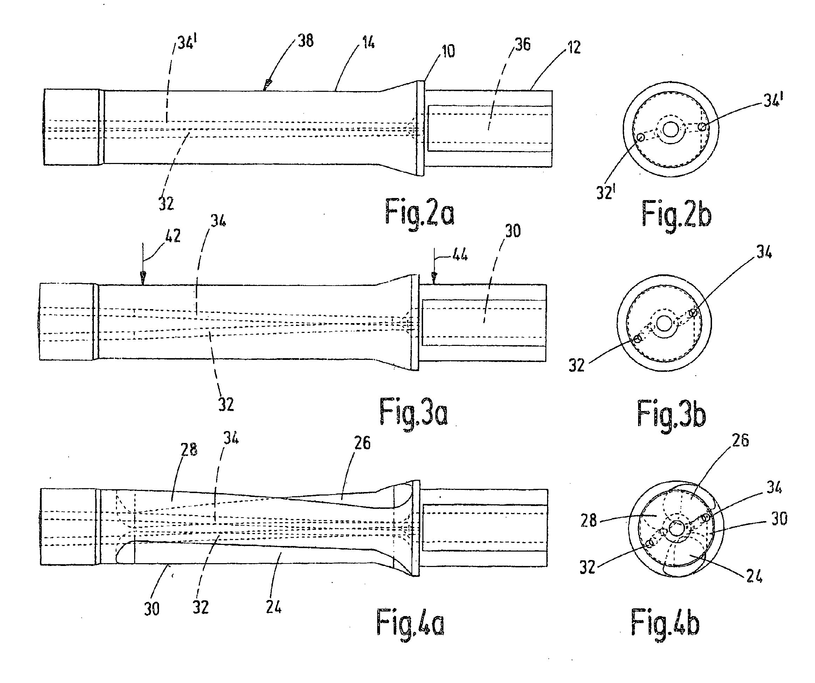

Bei der in Fig. 2a bis 4b angedeuteten Verfahrensweise werden zunächst zwei Tieflochbohrungen 32',34' in den ersten Rohling 38 eingebracht, die exzentrisch vom schneidkopfseitigen Ende zum schaftseitigen Ende schräg durch den Bohrerkörper 14 verlaufen und an ihrem schaftseitigen Ende in den zentralen Versorgungskanal 36 münden. Wie aus Fig. 2b zu ersehen ist, sind die Tieflochbohrungen 32',34' in Umfangsrichtung in einem Winkel ungleich 180° voneinander angeordnet, so dass beim fertigen Bohrer sichergestellt ist, dass die Kühlmittelkanäle sich innerhalb der noch zu erzeugenden Rippen 28,30 befinden.

In einem zweiten Verfahrensschritt gemäß Fig. 3a und b wird der Bohrerkörper zwischen den Positionen 42 und 44 eingespannt, im Zwischenbereich auf eine vorgegebene Temperatur erhitzt und sodann zwischen den beiden Einspannstellen einem Torsionsmoment ausgesetzt, das dafür sorgt, dass der Bohrerkörper plastisch verformt und dabei die Tieflochbohrungen 32',34' unter Bildung gewendelter Kühlmittelkanäle 32,34 gegeneinander verdrallt werden (vgl. Fig. 3b).

In einem dritten Verfahrensschritt gemäß Fig. 4a und b werden dann in den Rohling gemäß Fig. 3a und b gewendelte Spanfördernuten 24,26 so eingefräst, dass die äußere Spanfördernut 26 weniger gewendelt und daher steiler ist als die innere Spanfördernut 24 (vgl. Fig. 4b). Dadurch erhalten die Rippen 32,34 den vorbeschriebenen, in ihrer Längsrichtung variablen Dickenverlauf.

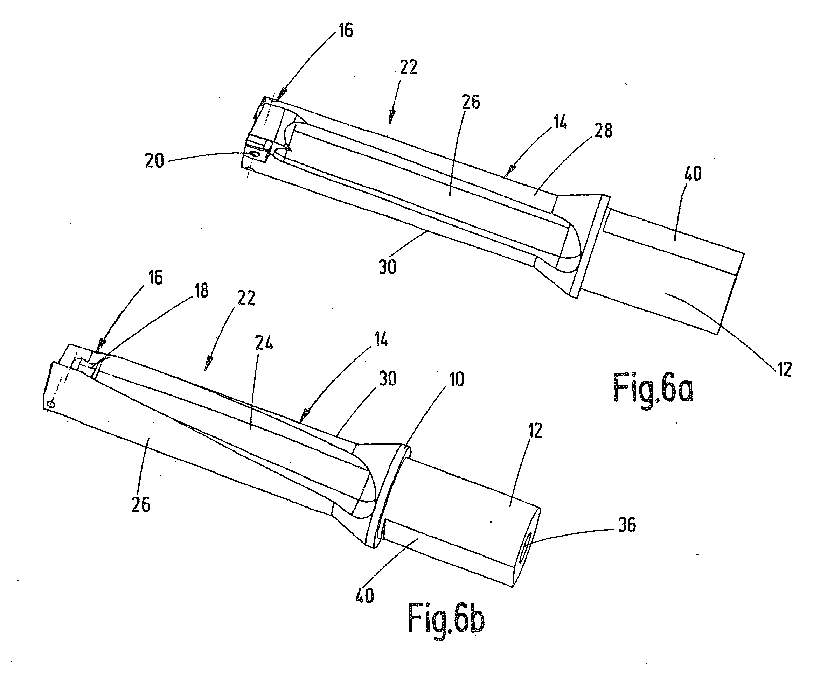

In einem letzten Verfahrensschritt wird der in Fig. 4a,b gezeigte Rohling an seinem schneidkopfseitigen Ende gekürzt und anschließend mit den die Plattensitze bildenden Ausnehmungen 18,20 versehen. Damit erhält man das in den Fig. 5a bis d und 6a bis d gezeigte fertige Bohrwerkzeug, in dessen Ausnehmungen 18,20 noch die nicht dargestellten Wendeschneidplatten eingesetzt werden müssen.

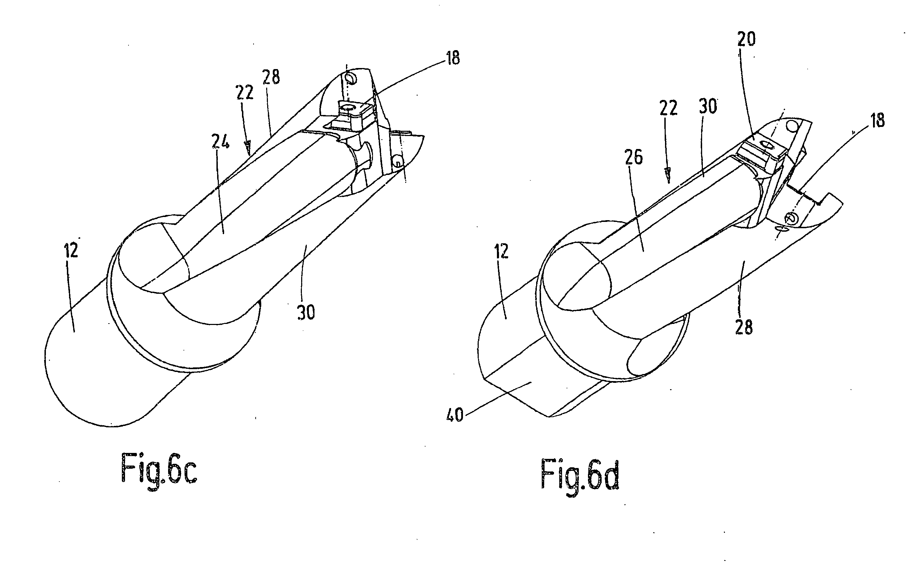

Das in den Fig. 7a und b gezeigte Ausführungsbeispiel unterscheidet sich von dem Ausführungsbeispiel nach Fig. 5 und 6 dadurch, dass nur die innere Spanfördernut 24 gewendelt ist und die äußere Spanfördernut 26 geradlinig ungewendelt verläuft. Zur Herstellung eines solchen Bohrerkörpers 14 werden die Spanfördernuten 24,26 entweder vor dem Verdrallen gegensinnig gewendelt in den Rohling so eingebracht, dass die äußere Spanfördernut 26 beim anschließenden Verdrallen im Wesentlichen geradlinig ausgerichtet wird. Mit dieser Methode ist es auch möglich, Spanfördernuten mit unterschiedlichen Steigungen in einem Verdrallvorgang zu erzeugen. Dazu müssen nur die Nuten im unverdrallten Zustand des Rohlings geeignet ausgerichtet werden.

Eine weitere Möglichkeit zur Erzeugung gewendelter Spanfördernuten 24,26 mit unterschiedlicher Steigung besteht darin, dass ihre Einbringung in zwei Schritten erfolgt. Zunächst wird eine erste ungewendelte oder gewendelte Nut in den noch unverdrallten Rohling eingebracht. Anschließend wird der Rohling einer ersten Verdrallung unterworfen. Sodann wird eine zweite Spanfördernut eingefräst, die ungewendelt oder gewendelt sein kann. Wenn jeweils von geradlinigen Spanfördernuten ausgegangen wird, wird zweckmäßig auch noch eine zweite Verdrallung vorgenommen, so dass zwei unterschiedlich gewendelte Spanfördernuten 24,26 erzeugt werden. Vor dem stufenweisen Verdrallen kann jeweils eine der Tieflochbohrungen 32',34'eingebracht werden, die beim weiteren Bearbeitungsvorgang zusammen mit den Spanfördernuten 24,26 und den zwischen diesen angeordneten Rippen 28,30 unterschiedlich gewendelt werden.

Zusammenfassend ist folgendes festzuhalten: Die Erfindung bezieht sich auf ein Bohrwerkzeug für Werkzeugmaschinen. Das Bohrwerkzeug umfasst einen Bohrerkörper 14, einen stirnseitig an diesem angeordneten Schneidkopf 16 und einen endseitig an diesem angeordneten Schaft 12, wobei der Bohrerkörper 14 zwei an ihren Flanken durch Rippen 28,30 begrenzte Spanfördernuten 24,26 aufweist, von denen eine erste Spanfördernut 24 wendelförmig gekrümmt ist. Eine Besonderheit der Erfindung besteht darin, dass eine zweite Spanfördernut 26 ungewendelt ist oder mit einer gegenüber der ersten Spanfördernut 24 abweichenden, vorzugsweise in gleicher Drehrichtung verlaufenden Steigung wendelförmig gekrümmt ist.

## Patentansprüche

1. Verfahren zur Herstellung von Bohrwerkzeugen, bestehend aus einem Bohrerkörper (14) mit einem stirnseitigen Schneidkopf (16) und einem endseitigen Schaft (12), bei welchem
- ein Grundmaterialkörper auf Bohrkörperkontur unter Bildung eines rotationssymmetrischen ersten Rohlings (38) spanabhebend gedreht wird,
- in einen zylindrischen Abschnitt des Rohlings (38) mindestens zwei Spanfördernuten (24,26) eingefräst werden,
- wobei eine erste der Spanfördernuten (26) zunächst in Form einer ungewendelten Nut in den Rohling (38) eingefräst wird
- und der auf diese Weise vorgefertigte Rohling an in axialem Abstand voneinander angeordneten Einspannstellen (42,44) in einer zwischen den Einspannstellen befindlichen Zone auf eine vorgegebene Temperatur erhitzt und an den Einspannstellen (42,44) mit einem koaxialen Torsionsmoment beaufschlagt und dabei um einen vorbestimmten Winkel wendelförmig plastisch verdrallt wird,
**dadurch gekennzeichnet, dass** in den vorgefertigen Rohling eine zweite Spanfördernut (24) in Form einer gewendelten Nut so eingefräst wird, dass zwischen den Spanfördernuten (24,26) jeweils eine Rippe (28, 30) stehenbleibt, die in ihrem Verlauf entlang dem Bohrerkörper (14) eine variable Breite aufweisen.

2. Verfahren nach Anspruch 1, **dadurch gekennzeichnet, dass** der vorgefertigte Rohling in einer zur Wendelung der zweiten Spanfördernut (24) gleichsinnigen oder gegensinnigen Drehrichtung wendelförmig verdrallt wird.

3. Verfahren zur Herstellung von Bohrwerkzeugen, bestehend aus einem Bohrerkörper (14) mit einem stirnseitigen Schneidkopf (16) und einem endseitigen Schaft (12), bei welchem
- ein Grundmaterialkörper auf Bohrkörperkontur unter Bildung eines rotationssymmetrischen ersten Rohlings (38) spanabhebend gedreht wird,
- in einen zylindrischen Abschnitt des Rohlings (38) mindestens zwei Spanfördernuten (24,26) eingefräst werden,
- wobei eine erste der Spanfördernuten zunächst in Form einer ungewendelten geradlinigen Längsnut in den Rohling eingefräst wird
- und der auf diese Weise vorgefertigte Rohling an in axialem Abstand voneinander angeordneten Einspannstellen (42,44) in einer zwischen den Einspannstellen befindlichen Zone auf eine vorgegebene Temperatur erhitzt und an den Einspannstellen (42,44) mit einem koaxialen Torsionsmoment beaufschlagt und dabei um einen vorbestimmten Winkel wendelförmig plastisch verdrallt wird,
**dadurch gekennzeichnet, dass** der Rohling zunächst mit einer ersten geradlinigen Längsnut (24) versehen, anschließend erwärmt und um einen ersten Drehwinkel vorverdrallt wird, dass anschließend eine zweite Nut (26) in den vorverdrallten Rohling eingefräst wird, und dass der Rohling sodann in erwärmtem Zustand um einen zweiten Drehwinkel verdrallt wird.

4. Verfahren zur Herstellung von Bohrwerkzeugen, bestehend aus einem Bohrerkörper (14) mit einem stirnseitigen Schneidkopf (16) und einem endseitigen Schaft (12), bei welchem
- ein Grundmaterialkörper auf Bohrerkörperkontur unter Bildung eines rotationssymmetrischen ersten Rohlings (38) spanabhebend gedreht wird,
- in einen zylindrischen Abschnitt des Rohlings mindestens zwei Spanfördernuten (24,26) eingefräst werden, wobei eine der Spanfördernuten (24) in Form einer geradlinigen oder gewendelten Nut in den Rohling eingefräst wird
- und der auf diese Weise vorgefertigte Rohling an in axialem Abstand voneinander angeordneten Einspannstellen (42,44) in einer zwischen den Einspannstellen befindlichen Zone auf eine vorgegebene Temperatur erhitzt und an den Einspannstellen (42,44) mit einem koaxialen Torsionsmoment beaufschlagt und dabei um einen vorbestimmten Winkel wendelförmig plastisch verdrallt wird,
**dadurch gekennzeichnet, dass** die zweite Spanfördernut (26) mit einer von der Steigung der ersten Spanfördernut (24) abweichenden Steigung gewendelt eingefräst wird, bevor der Rohling wendelförmig verdrallt wird.

5. Verfahren nach Anspruch 4, **dadurch gekennzeichnet, dass** die beiden Spanfördernuten (24,26) in den Rohling gegensinnig gewendelt eingebracht werden, und dass der so erzeugte Rohling anschließend so verdrallt wird, dass die Spanfördernuten (24,26) gleichsinnig gewendelt sind oder dass eine der Spanfördernuten (26) ungewendelt ist.

6. Verfahren nach einem der Ansprüche 1 bis 5, **dadurch gekennzeichnet, dass** in die beim Fräsvorgang zwischen den Nuten stehen- bleibenden Rippen (28,30) vor dem Verdrallen des Rohlings eine Tieflochbohrung (32',34') eingebracht wird, die beim Verdrallen des Rohlings unter Bildung eines Kühlmittelkanals (32,34) gewendelt wird.

7. Verfahren nach Anspruch 6, **dadurch gekennzeichnet, dass** die erste Tieflochbohrung (32') nach dem Einbringen der ersten geradlinigen Nut eingebracht wird und dass die zweite Tieflochbohrung (34') nach dem Einbringen der zweiten geradlinigen Nut eingebracht wird.

8. Verfahren zur Herstellung eines Bohrwerkzeugs, bestehend aus einem Bohrerkörper (14) mit einem stirnseitigen Schneidkopf (16) und einem endseitigen Schaft (12), bei welchem
- ein Grundmaterialkörper auf Bohrkörperkontur unter Bildung eines rotationssymmetrischen Rohlings (38) spanabhebend gedreht wird,
- in den ersten Rohling zwei im Abstand voneinander angeordnete Tieflochbohrungen (32',34') eingebracht werden, die sich von exzentrisch zu einer Zentralachse an der Stirnseite des schneidkopfseitigen Rohlingendes angeordneten Stellen aus in Richtung seines Schafts (12) erstrecken,
- der auf diese Weise vorgefertigte zweite Rohling an in axialem Abstand voneinander angeordneten Einspannstellen (42,44) in einer zwischen diesen befindlichen Zone auf eine vorgegebene Temperatur erhitzt und um einen vorbestimmten Winkel wendelförmig plastisch verdrallt wird, wobei einer der Tieflochbohrungen (32') schräg zur anderen Tieflochbohrung (34') und zur Zentralachse des ersten Rohlings verläuft, **dadurch gekennzeichnet dass** in den verdrallten dritten Rohling zwei Spanfördernuten (24,26) so geradlinig und/oder wendelförmig eingefräst werden, dass die beim Verdrallen gebildeten Kühlmittelkanäle (32,34) innerhalb von zwischen benachbarten Flanken der Spanfördernuten (24,26) stehenbleibenden Rippen (28,30) verlaufen, und dass die Kühlmittelkanäle (32,34) auf der Schneidkopfseite in einem unverdrallten vorzugsweise geradlinigen Bereich unter Bildung von in die Spanfördernuten (24,26) mündende Austrittsöffnungen mit ovalem oder eiförmigem Umriss angefräst werden.

9. Bohrwerkzeug für Werkzeugmaschinen mit einem Bohrerkörper (14), einem stirnseitig an diesem angeordneten Schneidkopf (16) und einem endseitig an diesem angeordneten Schaft (12), wobei der Bohrerkörper (14) zwei an ihren Flanken durch Rippen (28,30) begrenzte Spanfördemuten (24,26) aufweist, von denen eine erste Spanfördernut (24) wendelförmig gekrümmt ist und eine zweite Spanfördernut (26) ungewendelt ist öder mit einer gegenüber der ersten Spanfördemut (24) abweichenden, vorzugsweise in gleicher Drehrichtung verlaufenden Steigung wendelförmig gekrümmt ist, wobei in einer Rippe (28) des Bohrerkörpers (14) ein erster Kühlmittelkanal (34) vorgesehen ist, der sich vom schaftseitigen zum schneidkopfseitigen Ende des Bohrerkörpers (14) erstreckt und am schneidkopfseitigen Ende eine Austrittsöffnung aufweist, **dadurch gekennzeichnet, dass** in einer weiteren Rippe (30) ein weiterer Kühlmittelkanal (32) ausgebildet ist, der sich vom schaftseitigen zum schneidkopfseitigen Ende des Bohrerkörpers (14) erstreckt, wobei die in den verschiedenen Rippen (28,30) angeordneten Kühlmittelkanäle (32,34) einen unterschiedlich gewendelten Verlauf haben, wobei am schneidkopfseitigen Ende einer jeden Spanfördernut (24, 26) jeweils mindestens eine Schneidplatte angeordnet ist.

10. Bohrwerkzeug nach Anspruch 9, **dadurch gekennzeichnet, dass** die Schneidplatten in den einzelnen Spanfördernuten (24,26) in unterschiedlichen radialen Abständen von einer Zentralachse des Bohrerkörpers (14) angeordnet sind, wobei eine äußere Schneidplatte mit ihrer äußeren Schneidenecke über den Umfang des Bohrerkörpers (14) und eine innere Schneidplatte mit ihrer inneren Schneidenecke über die Zentralachse radial überstehen und dass die der inneren Schneidplatte zugeordnete Spanfördernut (24) stärker gewendelt ist, als die der äußeren Schneidplatte zugeordnete Spanfördernut (26).

11. Bohrwerkzeug nach Anspruch 9, **dadurch gekennzeichnet, dass** der Schneidkopf (16) als vorzugsweise lösbar am Bohrerkörper (14) fixierte Bohrkrone ausgebildet ist.

12. Bohrwerkzeug nach einem der Ansprüche 9 bis 11, **dadurch gekennzeichnet, dass** die Spanfördernuten (24,26) zu ihren schneidkopfseitigen und/oder schaftseitigen Enden hin steiler gewendelt oder ungewendelt sind.

13. Bohrwerkzeug nach einem der Ansprüche 9 bis 12, **dadurch gekennzeichnet, dass** die Spanfördernuten (24,26) an ihren schneidkopfseitigen und/oder an ihren schaftseitigen Enden ungewendelt achsparallel auslaufen.

14. Bohrwerkzeug nach einem der Ansprüche 9 bis 13, **dadurch gekennzeichnet, dass** eine erste der zwischen den Spanfördernuten (24,26) angeordneten Rippen (30) in ihrem Verlauf vom Schneidkopf (16) zum Schaft (12) hin breiter wird, und dass eine zweite der zwischen den Spanfördernuten (24,26) angeordneten Rippen (28) in ihrem Verlauf vom Schneidkopf (16) zum Schaft (12) hin schmaler wird, wobei vorzugsweise die die äußere Schneidplatte tragende Rippe (30) breiter und die die innere Schneidplatte tragende Rippe (28) schmaler wird.

15. Bohrwerkzeug nach einem der Ansprüche 9 bis 14, **dadurch gekennzeichnet, dass** die Austrittsöffnungen innerhalb je einer der Spanfördernuten (24,26) angeordnet sind, wobei die Austrittsöffnungen über ein vorzugsweise ungewendeltes Kanalendstück mit einem der in den Rippen (28,30) angeordneten Kühlmittelkanäle (32,34) kommunizieren.

## Claims

1. A method for producing drilling tools, comprising a drill body (14) having an end cutting head (16) and an end shank (12), in which
- a base material body is turned by machining to a drilling body contour forming a rotationally symmetrical first blank (38),
- at least two chip flutes (24, 26) are milled into a cylindrical section of the blank (38),
- wherein a first of the chip flutes (26) is first of all milled into the blank (38) in the form of a non-helical groove,
- and the blank which has been prefabricated in this way is heated to a predetermined temperature at clamping-in points (42, 44), which are arranged at an axial distance from one another, in a zone which is located between the clamping-in points, and has a coaxial torsional moment applied to it at the clamping-in points (42, 44) and in the process is plastically twisted in helical shape through a predetermined angle,
**characterized in that** a second chip flute (24) in the form of a helical groove is milled into the prefabricated blank such that a rib (28, 30) remains between each of the chip flutes (24, 26), the profile of which ribs (28, 36) has a variable width along the drill body (14).

2. The method as claimed in claim 1, **characterized in that** the prefabricated blank is twisted in a helical shape in the same rotation direction or in the opposite rotation direction as the helix of the second chip flute (24).

3. A method for producing drilling tools, comprising a drill body (14) having an end cutting head (16) and an end shank (12), in which
- a base material body is turned by machining to a drilling body contour forming a rotationally symmetrical first blank (38),
- at least two chip flutes (24, 26) are milled into a cylindrical section of the blank (38),
- wherein a first of the chip flutes is milled into the blank at first in the form of a non-helical straight longitudinal groove,
- and the blank which has been prefabricated in this way is heated to a predetermined temperature at clamping-in points (42, 44), which are arranged at an axial distance from one another, in a zone which is located between the clamping-in points, and has a coaxial torsional moment applied to it at the clamping-in points (42, 44) and in the process is plastically twisted in helical shape through a predetermined angle,
**characterized in that** the blank is first of all provided with a first straight longitudinal groove (24), is then heated and is initially twisted through a first rotation angle, **in that** a second groove (26) is then milled into the initially twisted blank, and **in that** the blank is then twisted through a second rotation angle, in the heated state.

4. A method for producing drilling tools, comprising a drill body (14) having an end cutting head (16) and an end shank (12), in which
- a base material body is turned by machining to a drilling body contour forming a rotationally symmetrical first blank (38),
- at least two chip flutes (24, 26) are milled into a cylindrical section of the blank (38), wherein one of the chip flutes (24) is milled into the blank in the form of a straight or helical groove,
- and the blank which has been prefabricated in this way is heated to a predetermined temperature at clamping-in points (42, 44), which are arranged at an axial distance from one another, in a zone which is located between the clamping-in points, and has a coaxial torsional moment applied to it at the clamping-in points (42, 44) and in the process is plastically twisted in helical shape through a predetermined angle,
**characterized in that** the second chip flute (26) is milled in helically with a pitch which is not the same as the pitch of the first chip flute (24), before the blank is twisted to a helical shape.

5. The method as claimed in claim 4, **characterized in that** the two chip flutes (24, 26) are incorporated helically in opposite senses in the blank, and **in that** the blank that has been produced in this way is then twisted such that the chip flutes (24, 26) are helical in the same sense, or such that one of the chip flutes (26) is not helical.

6. The method as claimed in one of claims 1 to 5, **characterized in that** a deep-hole bore (32', 34') is incorporated into the ribs (28, 30), which remain between the grooves during the milling process, before the twisting of the blank and is made helical during the twisting of the blank, forming a coolant channel (32, 34).

7. The method as claimed in claim 6, **characterized in that** the first deep-hole bore (32') is incorporated after the introduction of the first straight groove, and **in that** the second deep-hole bore (34') is incorporated after the introduction of the second straight groove.

8. A method for producing a drilling tool, comprising a drill body (14) having an end cutting head (16) and an end shank (12), in which
- a base material body is turned by machining to a drilling body contour forming a rotationally symmetrical blank (38),
- two deep-hole bores (32', 34') are incorporated in the first blank, are arranged at a distance from one another and extend from points which are arranged eccentrically with respect to a center axis on the end face of the cutting-head-end blank end, in the direction of its shank (12),
- the second blank which has been prefabricated in this manner is heated to a predetermined temperature at clamping-in points (42, 44), which are arranged at an axial distance from one another, in a zone which is located between them, and is twisted plastically in a helical shape through a predetermined angle,
wherein one of the deep-hole bores (32') runs obliquely with respect to the other deep-hole bore (34') and with respect to the central axis of the first blank, **characterized in that in that** two chip flutes (24, 26) are milled straight and/or in a helical shape in the twisted third blank such that the coolant channels (32, 34) which are formed during twisting run within ribs (28, 30) which remain between adjacent flanks of the chip flutes (24, 26), and **in that** the coolant channels (32, 34) on the cutting-head side are milled in an untwisted, preferably straight, area, forming outlet openings with an oval or egg-shaped outline which open into the chip flutes (24, 26).

9. A drilling tool for machine tools having a drill body (14), a cutting head (16) which is arranged thereon at the end, and a shank (12) which is arranged thereon at the end, wherein the drill body (14) has two chip flutes (24, 26), which are bounded on their flanks by ribs (28, 30), of which a first chip flute (24) is curved in a helical shape, and a second chip flute (26) is not helical or is curved in a helical shape with a pitch which differs from that of the first chip flute (24), and preferably runs in the same rotation direction, wherein a first coolant channel (34) is provided in a rib (28) of the drill body (14), extends from the shank end to the cutting-head end of the drill body (14), and has an outlet opening at the cutting-head end, **characterized in that** a further coolant channel (32) is formed in a further rib (30) and extends from the shank end to the cutting-head end of the drill body (14), wherein the coolant channels (32, 34) which are arranged in the various ribs (28, 30) have a differently helical profile, whereby that at least one cutting insert is in each case arranged at the cutting-head end of each chip flute (24, 26).

10. The drilling tool as claimed in claim 9, **characterized in that** the cutting inserts in the individual chip flutes (24, 26) are arranged at different radial distances from a central axis of the drill body (14), wherein the outer cutting edge of an outer cutting insert projects radially beyond the circumference of the drill body (14), and the inner cutting edge of an inner cutting insert projects radially beyond the central axis, and **in that** the chip flute (24) which is associated with the inner cutting insert is more helical than the chip flute (26) associated with the outer cutting insert.

11. The drilling tool as claimed in claim 9, **characterized in that** the cutting head (16) preferably is detachably fixed to the drill body (14) in the form of a drill bit.

12. The drilling tool as claimed in one of claims 9 to 11, **characterized in that** the chip flutes (24, 26) are more helical or are not helical toward their cutting-head and/or shank ends.

13. The drilling tool as claimed in one of claims 9 to 12, **characterized in that** the chip flutes (24, 26) end parallel to the axis, without being helical, at their cutting-head ends and/or at their shank ends.

14. The drilling tool as claimed in one of claims 9 to 13, **characterized in that** a first of the ribs (30) which are arranged between the chip flutes (24, 26) has a profile which becomes broader from the cutting head (16) toward the shank (12) and **in that** a second of the ribs (28) which are arranged between the chip flutes (24, 26) has a profile which becomes narrower from the cutting head (16) toward the shank (12), whereby preferably the rib (30) to which the outer cutting insert is fitted becomes broader, and the rib (28) to which the inner cutting insert is fitted becomes narrower.

15. The drilling tool as claimed in one of claims 9 to 14, **characterized in that** the outlet openings are arranged within in each case one of the chip flutes (24, 26), whereby the outlet openings preferably communicate via a non-helical channel end piece with one of the cooling channels (32, 34) which are arranged in the ribs (28, 30).

## Revendications

1. Procédé de fabrication d'outils de perçage constitués d'un corps de foret (14) doté d'une tête de coupe (16) à l'extrémité avant et d'une queue (12) à l'extrémité arrière, selon lequel
- un corps en matériau de base est usiné au tour par enlèvement de matière au contour du corps de foret, en formant une première ébauche (38) à symétrie de révolution,
- au moins deux rainures de transport de copeaux (24, 26) sont fraisées dans une partie cylindrique de l'ébauche (38),
- sachant qu'on fraise d'abord dans l'ébauche (38) une première (26) des rainures de transport de copeaux sous la forme d'une rainure non hélicoïdale,
- et que l'ébauche ainsi préfabriquée est chauffée à une température prédéfinie dans une zone située entre des points de serrage (42, 44) disposés à distance axiale l'un de l'autre et est sollicitée aux points de serrage (42, 44) par un couple de torsion coaxial, et elle est ainsi torsadée plastiquement en hélice avec un angle prédéterminé,
**caractérisé en ce qu'**on fraise dans l'ébauche préfabriquée une deuxième rainure de transport de copeaux (24) sous la forme d'une rainure hélicoïdale de telle sorte qu'une nervure respective (28, 30) reste présente entre les rainures de transport de copeaux (24, 26), lesdites nervures présentant une largeur variable sur leur étendue le long du corps de foret (14).

2. Procédé selon la revendication 1, **caractérisé en ce que** l'ébauche préfabriquée est torsadée en hélice dans un sens de rotation identique ou contraire à celui de la formation en hélice de la deuxième rainure de transport de copeaux (24).

3. Procédé de fabrication d'outils de perçage constitués d'un corps de foret (14) doté d'une tête de coupe (16) à l'extrémité avant et d'une queue (12) à l'extrémité arrière, selon lequel
- un corps en matériau de base est usiné au tour par enlèvement de matière au contour du corps de foret, en formant une première ébauche (38) à symétrie de révolution,
- au moins deux rainures de transport de copeaux (24, 26) sont fraisées dans une partie cylindrique de l'ébauche (38),
- sachant qu'on fraise d'abord dans l'ébauche une première des rainures de transport de copeaux sous la forme d'une rainure longitudinale rectiligne non hélicoïdale,
- et que l'ébauche ainsi préfabriquée est chauffée à une température prédéfinie dans une zone située entre des points de serrage (42, 44) disposés à distance axiale l'un de l'autre et est sollicitée aux points de serrage (42, 44) par un couple de torsion coaxial, et elle est ainsi torsadée plastiquement en hélice avec un angle prédéterminé,
**caractérisé en ce que** l'ébauche est d'abord pourvue d'une première rainure longitudinale rectiligne (24), puis est chauffée et est pré-torsadée avec un premier angle de rotation, **en ce qu'**on fraise ensuite une deuxième rainure (26) dans l'ébauche pré-torsadée, et **en ce que** l'ébauche est ensuite, à l'état chauffé, torsadée avec un deuxième angle de rotation.

4. Procédé de fabrication d'outils de perçage constitués d'un corps de foret (14) doté d'une tête de coupe (16) à l'extrémité avant et d'une queue (12) à l'extrémité arrière, selon lequel
- un corps en matériau de base est usiné au tour par enlèvement de matière au contour du corps de foret, en formant une première ébauche (38) à symétrie de révolution,
- au moins deux rainures de transport de copeaux (24, 26) sont fraisées dans une partie cylindrique de l'ébauche (38), sachant qu'une (24) des rainures de transport de copeaux est fraisée dans l'ébauche sous la forme d'une rainure rectiligne ou hélicoïdale,
- et que l'ébauche ainsi préfabriquée est chauffée à une température prédéfinie dans une zone située entre des points de serrage (42, 44) disposés à distance axiale l'un de l'autre et est sollicitée aux points de serrage (42, 44) par un couple de torsion coaxial, et elle est ainsi torsadée plastiquement en hélice avec un angle prédéterminé,
**caractérisé en ce que** la deuxième rainure de transport de copeaux (26) est fraisée en hélice avec un pas différent du pas de la première rainure de transport de copeaux (24), avant que l'ébauche soit torsadée en hélice.

5. Procédé selon la revendication 4, **caractérisé en ce que** les deux rainures de transport de copeaux (24, 26) sont pratiquées dans l'ébauche en hélices de sens contraires, et **en ce que** l'ébauche ainsi produite est ensuite torsadée de telle sorte que les rainures de transport de copeaux (24, 26) sont en hélices de même sens ou qu'une (26) des rainures de transport de copeaux est non hélicoïdale.

6. Procédé selon l'une des revendications 1 à 5, **caractérisé en ce qu'**on pratique avant de torsader l'ébauche un perçage profond (32', 34') dans les nervures (28, 30) restant présentes entre les rainures lors de l'opération de fraisage, perçage qui, lors du torsadage de l'ébauche, est torsadé en formant un canal de fluide de refroidissement (32, 34).

7. Procédé selon la revendication 6, **caractérisé en ce que** le premier perçage profond (32') est pratiqué avant de pratiquer la première rainure rectiligne, et **en ce que** le deuxième perçage profond (34') est pratiqué après avoir pratiqué la deuxième rainure rectiligne.

8. Procédé de fabrication d'un outil de perçage constitué d'un corps de foret (14) doté d'une tête de coupe (16) à l'extrémité avant et d'une queue (12) à l'extrémité arrière, selon lequel
- un corps en matériau de base est usiné au tour par enlèvement de matière au contour du corps de foret, en formant une ébauche (38) à symétrie de révolution,
- deux perçages profonds (32', 34') disposés à distance l'un de l'autre sont pratiqués dans la première ébauche, perçages qui s'étendent, depuis des points disposés excentriquement par rapport à un axe central sur le côté avant de l'extrémité côté tête de coupe de l'ébauche, en direction de la queue (12) de celle-ci,
- la deuxième ébauche ainsi préfabriquée est chauffée à une température prédéfinie dans une zone située entre des points de serrage (42, 44) disposés à distance axiale l'un de l'autre et est torsadée plastiquement en hélice avec un angle prédéterminé,
- sachant qu'un (32') des perçages profonds s'étend en oblique par rapport à l'autre perçage profond (34') et par rapport à l'axe central de la première ébauche,
**caractérisé en ce qu'**on fraise dans la troisième ébauche torsadée deux rainures de transport de copeaux (24, 26) de manière rectiligne et/ou en hélice de telle sorte que les canaux de fluide de refroidissement (32, 34) formés lors du torsadage s'étendent à l'intérieur de nervures (28, 30) restant présentes entre des flancs voisins des rainures de transport de copeaux (24, 26), et **en ce que** les canaux de fluide de refroidissement (32, 34) sont fraisés côté tête de coupe dans une région non torsadée de préférence rectiligne, en formant des ouvertures de sortie de contour ovale ou oviforme qui débouchent dans les rainures de transport de copeaux (24, 26).

9. Outil de perçage pour machines-outils avec un corps de foret (14), une tête de coupe (16) disposée à l'extrémité avant de ce corps et une queue (12) disposée à l'extrémité arrière de ce corps, sachant que le corps de foret (14) présente deux rainures de transport de copeaux (24, 26) délimitées sur leurs flancs par des nervures (28, 30), parmi lesquelles une première rainure de transport de copeaux (24) est courbée en hélice et une deuxième rainure de transport de copeaux (26) n'est pas hélicoïdale ou est courbée en hélice avec un pas différent de celui de la première rainure de transport de copeaux (24) et ayant de préférence le même sens de rotation, sachant qu'un premier canal de fluide de refroidissement (34) est prévu dans une nervure (28) du corps de foret (14), canal qui s'étend de l'extrémité côté queue à l'extrémité côté tête de coupe du corps de foret (14) et qui présente une ouverture de sortie à l'extrémité côté tête de coupe, **caractérisé en ce qu'**un autre canal de fluide de refroidissement (32), qui s'étend de l'extrémité côté queue à l'extrémité côté tête de coupe du corps de foret (14), est formé dans une autre nervure (30), sachant que les canaux de fluide de refroidissement (32, 34) disposés dans les différentes nervures (28, 30) possèdent une allure hélicoïdale différente, sachant qu'au moins une plaquette de coupe respective est disposée à l'extrémité côté tête de coupe de chaque rainure de transport de copeaux (24, 26).

10. Outil de perçage selon la revendication 9, **caractérisé en ce que** les plaquettes de coupe sont disposées dans les rainures individuelles de transport de copeaux (24, 26) à différentes distances radiales d'un axe central du corps de foret (14), sachant qu'une plaquette de coupe extérieure dépasse radialement du pourtour du corps de foret (14) par son point d'attaque extérieur et qu'une plaquette de coupe intérieure dépasse radialement de l'axe central par son point d'attaque intérieur, et **en ce que** la rainure de transport de copeaux (24) associée à la plaquette de coupe intérieure est plus fortement hélicoïdale que la rainure de transport de copeaux (26) associée à la plaquette de coupe extérieure.

11. Outil de perçage selon la revendication 9, **caractérisé en ce que** la tête de coupe (16) est réalisée sous la forme d'une couronne fixée de préférence de manière amovible sur le corps de foret (14).

12. Outil de perçage selon l'une des revendications 9 à 11, **caractérisé en ce que** les rainures de transport de copeaux (24, 26) sont hélicoïdales ou non hélicoïdales avec une plus forte inclinaison en direction de leurs extrémités côté tête de coupe et/ou côté queue.

13. Outil de perçage selon l'une des revendications 9 à 12, **caractérisé en ce que** les rainures de transport de copeaux (24, 26) débouchent de manière non hélicoïdale en parallélisme axial à leurs extrémités côté tête de coupe et/ou côté queue.

14. Outil de perçage selon l'une des revendications 9 à 13, **caractérisé en ce qu'**une première (30) des nervures disposées entre les rainures de transport de copeaux (24, 26) s'élargit sur son étendue de la tête de coupe (16) à la queue (12) et **en ce qu'**une deuxième (28) des nervures disposées entre les rainures de transport de copeaux (24, 26) se rétrécit sur son étendue de la tête de coupe (16) à la queue (12), sachant que, de préférence, la nervure (30) portant la plaquette de coupe extérieure s'élargit et la nervure (28) portant la plaquette de coupe intérieure se rétrécit.

15. Outil de perçage selon l'une des revendications 9 à 14, **caractérisé en ce que** les ouvertures de sortie sont respectivement disposées à l'intérieur de chacune des rainures de transport de copeaux (24, 26), sachant que les ouvertures de sortie communiquent par l'intermédiaire d'un embout de canal de préférence non hélicoïdal avec un des canaux de fluide de refroidissement (32, 34) disposés dans les nervures (28, 30).
